# EUROPEAN PATENT APPLICATION

(11) **EP 4 046 537 A1**
(43) Date of publication of application: **24.08.2022**
(21) Application number: 20876765.7
(22) Date of filing: 15.10.2020
(51) Int. Cl.: A47C 7/74, B60N 2/56, B62J 1/12

(54) **STRADDLE-TYPE SEAT**

(30) Priority: 16.10.2019 JP 2019189555
(71) Applicant: TS Tech Co., Ltd., Asaka-shi Saitama 351-0012 (JP)
(72) Inventor: TAKAHASHI, Yoichi, Shioya-gun, Tochigi 329-1217 (JP)
(74) Representative: Grünecker Patent- und Rechtsanwälte PartG mbB
(86) International application number: PCT/JP2020/038862
(87) International publication number: WO 2021/075481

(57) **Abstract**

There is provided a straddle-type seat capable of improving the comfort of a seated occupant by blowing air to a region of buttocks of the seated occupant. A motorcycle seat S on which a seated occupant is seated in a straddling state includes a blower 30 and an air blowing port K through which air blown from the blower 30 passes. The air blowing port K is provided at a position facing buttocks of the seated occupant. Specifically, the motorcycle seat S includes a front seating portion S1 and a non-seating portion S3 provided at a rear end of the front seating portion S1. The air blowing port K is provided at a lower portion of the non-seating portion S3.

## Description

### TECHNICAL FIELD

The present invention relates a straddle-type seat, particularly to a straddle-type seat in which an air blowing device is built-in.

### BACKGROUND ART

Regarding a motorcycle including an air blowing device, a technique is known in which an air guide duct is provided between an air guide port that is open to a front of a front cover and an air blowing port formed at a position below a rear cover in a seat, the air guide duct merges with a shroud, and a temperature adjustment device for an occupant that blows air to the vicinity of thighs of a seated occupant (occupant) from below the seat (for example, PATENT LITERATURE 1).

### CITATION LIST

### PATENT LITERATURE

PATENT LITERATURE 1: JP H1-145890 U

### SUMMARY OF INVENTION

### TECHNICAL PROBLEM

In the technique disclosed in PATENT LITERATURE 1, air blowing is limited to the vicinity of the thighs of the seated occupant, and air is not blown to buttocks of or to a back surface of the seated occupant. In a straddle-type seat, underbutts of the seated occupant are likely to get stuffy, the temperature of a region from the buttocks to a lumbar on a back surface side of the seated occupant is likely to rise, which is a problem.

The present invention is conceived in view of the above problem, and an object of the present invention is to provide a straddle-type seat capable of improving the comfort of a seated occupant by blowing air to a region of buttocks of the seated occupant.

### SOLUTION TO PROBLEM

In order to solve the above problem, according to an aspect of the present invention, there is provided a straddle-type seat on which a seated occupant is seated in a straddling state, the seat including: an air blowing device; and an air blowing port through which air blown from the air blowing device passes. The air blowing port is provided at a position facing buttocks of the seated occupant.

In the straddle-type seat of the present invention configured as described above, air blowing can be performed such that the air from the air blowing device flows around the buttocks from behind the seated occupant to wrap around the underbutts or the seated occupant.

The straddle-type seat may include a seating portion on which the seated occupant is seated; and a standing wall portion provided at a rear end of the seating portion. The air blowing port may be provided at a lower portion of the standing wall portion.

In the above configuration, since the air is blown to an underbutt side of the seated occupant, the underbutts can be suppressed from getting stuffy.

The straddle-type seat may include a seat bottom plate, and the air blowing device may be disposed on a back surface side of the seat bottom plate at a position avoiding the seating portion.

In the above configuration, the air blowing device can be efficiently and compactly disposed.

In the straddle-type seat, a back surface of the seat bottom plate may be provided with a mounting member that abuts a vehicle body when the straddle-type seat is attached to the vehicle body, and the air blowing device may be disposed in front of the mounting member.

In the above configuration, air blowing by the air blowing device is stabilized by suppression of vibration by the mounting member.

In the straddle-type seat, the air blowing port may include a duct member, the duct member may include a duct opening portion at a position facing the air blowing port, and a width of the duct opening portion may be wider than a width of a buttock support surface of the seating portion.

In the above configuration, since the blocking of the duct opening portion by the buttocks of the seated occupant is suppressed, the backflow of the air blown from the air blowing device can be suppressed, and the air can also be blown to a lateral side of the buttocks of the seated occupant.

In the straddle-type seat, the seat bottom plate may include a protruding portion protruding upward from a front surface of the seat bottom plate, and the duct member may include a fitting portion that is fitted to the protruding portion.

In the above configuration, the duct member can be easily attached and fixed to the seat bottom plate (namely, the ease of assembling the duct member to the seat bottom plate is improved).

In the straddle-type seat, the duct opening portion may be curved such that a central portion of the duct opening portion is located behind outer portions of the duct opening portion in a width direction of the straddle-type seat, and the duct opening portion may be disposed to be separated from the air blowing port.

In the above configuration, since the buttocks of the seated occupant are avoided from directly abutting the duct member, air blowing can be efficiently performed.

In the straddle-type seat, a space extending in a width direction of the straddle-type seat may be formed below the duct opening portion.

In the above configuration, since air that hits the back of the seated occupant and returns can be received by and flow into the space, and blown forward from both right and left sides in the width direction of the seat, so that the air blowing efficiency is improved.

In the straddle-type seat, the air blowing port may include a mesh member.

In the above configuration, foreign matter is suppressed from entering the seat from the outside via the air blowing port while the air blowing port is secured.

The straddle-type seat may further include a temperature adjustment member by which a temperature of the air blown from the air blowing device is adjustable.

In the above configuration, the comfort of the seated occupant can be further improved by a cooling and warming effect of the temperature adjustment member.

### ADVANTAGEOUS EFFECTS OF INVENTION

According to the straddle-type seat of the present invention, air blowing can be performed such that the air from the air blowing device flows around the buttocks from behind the seated occupant to wrap around the underbutts or the seated occupant.

In addition, according to the straddle-type seat of the present invention, since the air is blown to the underbutt side of the seated occupant, the underbutts can be suppressed from getting stuffy.

In addition, according to the straddle-type seat of the present invention, the air blowing device can be efficiently and compactly disposed.

In addition, according to the straddle-type seat of the present invention, air blowing by the air blowing device is stabilized by suppression of vibration by the mounting member.

In addition, according to the straddle-type seat of the present invention, since the blocking of the duct opening portion by the buttocks of the seated occupant is suppressed, the backflow of the air blown from the air blowing device can be suppressed, and the air can also be blown to the lateral side of the buttocks of the seated occupant.

In addition, according to the straddle-type seat of the present invention, the duct member can be easily attached and fixed to the seat bottom plate (namely, the ease of assembling the duct member to the seat bottom plate is improved).

In addition, according to the straddle-type seat of the present invention, since the buttocks of the seated occupant are avoided from directly abutting the duct member, air blowing can be efficiently performed.

In addition, according to the straddle-type seat of the present invention, since air that hits the back of the seated occupant and returns can be received by and flow into the space, and blown forward from both right and left sides in the width direction of the seat, so that the air blowing efficiency is improved.

In addition, according to the straddle-type seat of the present invention, foreign matter is suppressed from entering the seat from the outside via the air blowing port while the air blowing port is secured.

In addition, according to the straddle-type seat of the present invention, the comfort of the seated occupant can be further improved by the cooling and warming effect of the temperature adjustment member.

### BRIEF DESCRIPTION OF DRAWINGS

FIG. 1 is an external view of a motorcycle including a motorcycle seat according to one embodiment of the present invention.
FIG. 2 is an external view of the motorcycle seat according to one embodiment of the present invention.
FIG. 3 is a front view of the vicinity of an air blowing port of the motorcycle seat according to one embodiment of the present invention.
FIG. 4 is a perspective view illustrating a state where a duct member is attached to a seat bottom plate of the motorcycle seat according to one embodiment of the present invention.
FIG. 5 is a perspective view of a cushion pad of the motorcycle seat according to one embodiment of the present invention.
FIG. 6 is a perspective view of the duct member provided in the motorcycle seat according to one embodiment of the present invention.
FIG. 7 is a front view of the duct member provided in the motorcycle seat according to one embodiment of the present invention.
FIG. 8 is a top view of the duct member provided in the motorcycle seat according to one embodiment of the present invention.
FIG. 9 is a bottom view of the duct member provided in the motorcycle seat according to one embodiment of the present invention.
FIG. 10 is a rear view of the duct member provided in the motorcycle seat according to one embodiment of the present invention.
FIG. 11 is a side view of the duct member provided in the motorcycle seat according to one embodiment of the present invention.
FIG. 12 is an exploded perspective view of the motorcycle seat according to one embodiment of the present invention.
FIG. 13 is a cross-sectional view taken along line A-A in FIG. 2.
FIG. 14 is an enlarged cross-sectional view of the vicinity of the air blowing port taken along line A-A in FIG. 2.
FIG. 15 a block diagram illustrating a configuration of a fluid supply device and air cells.
FIG. 16 is a view illustrating the fluid supply device.
FIG. 17 is a view illustrating a back side of a front pad and the disposition of the air cells.
FIG. 18 is a cross-sectional view taken along line B-B in FIG. 17.
FIG. 19 is a view illustrating a tablet terminal installed in the motorcycle according to one embodiment of the present invention.
FIG. 20 is a view illustrating an example of screen display of the tablet terminal.
FIG. 21 is a flowchart illustrating a procedure of a body pressure distribution optimization flow.
FIG. 22 is a flowchart illustrating a body pressure distribution adjustment flow.
FIG. 23 is an exploded perspective view of surroundings of an air blowing device provided in the motorcycle seat according to a modification example.
FIG. 24 is an enlarged cross-sectional view of the vicinity of the air blowing port in the motorcycle seat according to a modification example taken along line A-A in FIG. 2.
FIG. 25 is a cross-sectional view of a duct member provided in the motorcycle seat according to a modification example.
FIG. 26 is an external view of a motorcycle seat according to a modification example.
FIG. 27 is a cross section of the motorcycle seat according to a modification example corresponding to a cross-sectional view taken along line A-A in FIG. 2.
FIG. 28 is a view illustrating the disposition of a heater member in the motorcycle seat according to a modification example.
FIG. 29 is a cross-sectional view taken along line C-C in FIG. 28.

### DESCRIPTION OF EMBODIMENTS

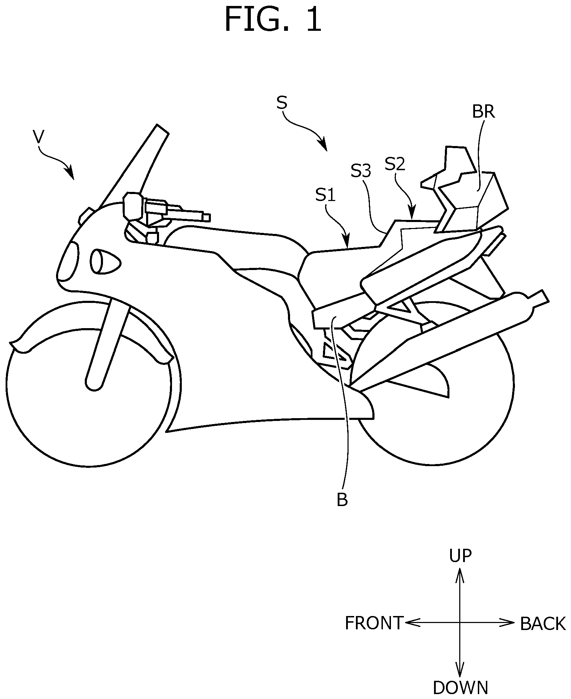

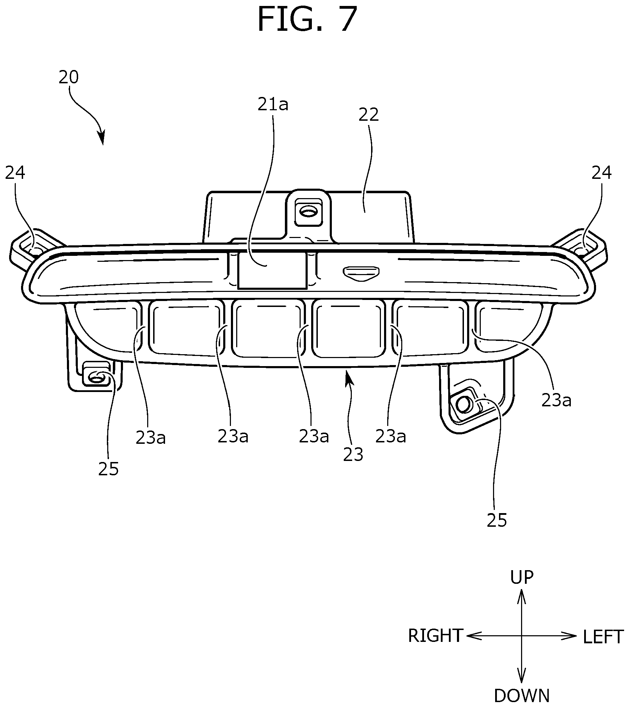

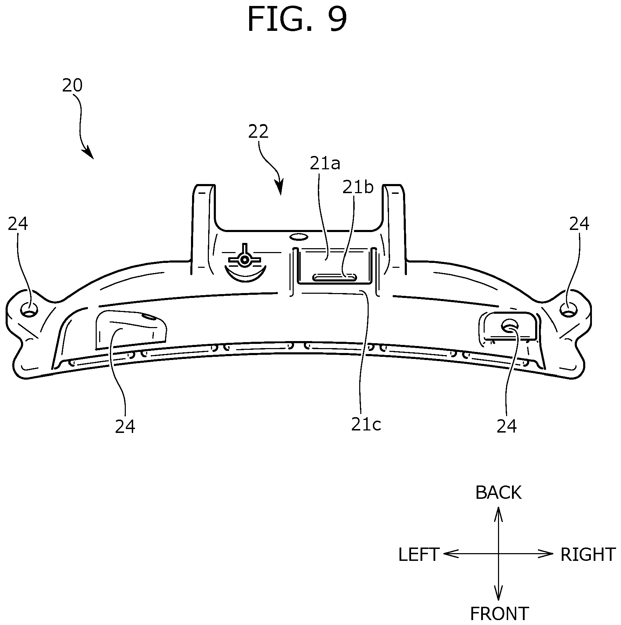

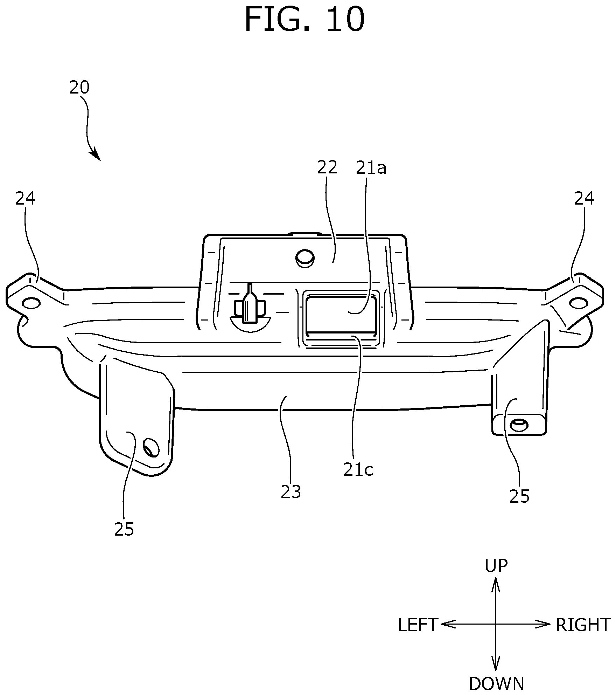

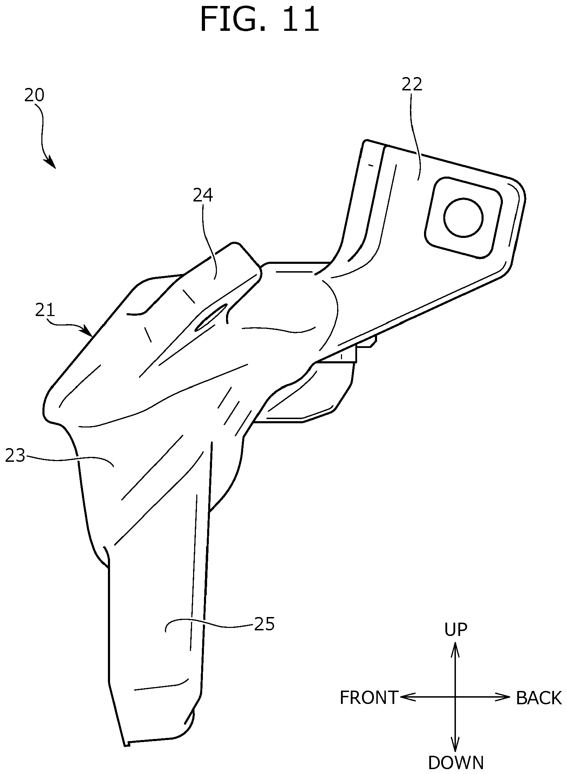

Hereafter, a motorcycle seat S will be described as a straddle-type seat according to an embodiment of the present invention (hereinafter, referred to as the present embodiment) with reference to FIGS. 1 to 29. The motorcycle seat S according to the present embodiment is a saddle-type seat on which a seated occupant (occupant or driver) is seated in a straddling state. The motorcycle seat S is detachably provided in a motorcycle V.

Incidentally, an embodiment to be described below is merely one example provided to facilitate understanding of the present invention, and does not limit the present invention. Namely, the shapes, dimensions, dispositions, and the like of members to be described below can be changed or improved without departing from the concept of the present invention, and it goes without saying that the present invention includes equivalents thereof.

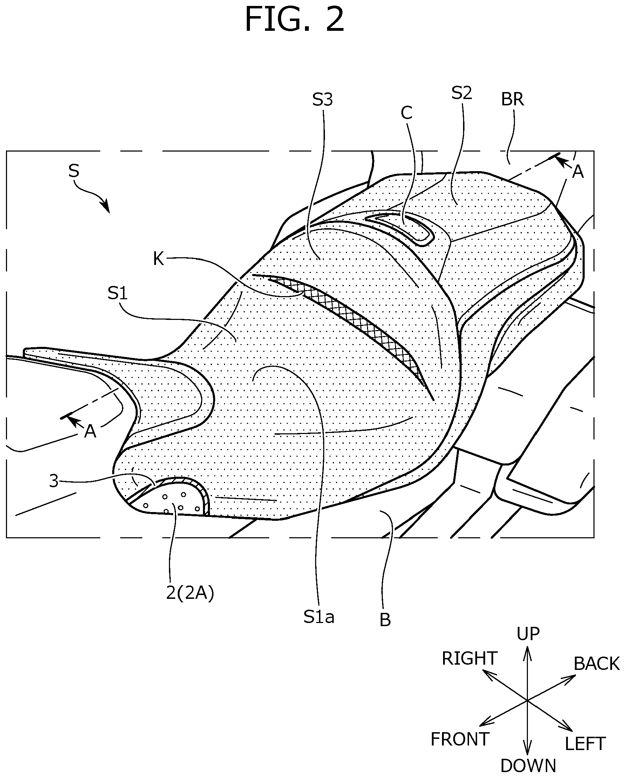

Regarding terms indicating directions in the specification, each direction is defined as in FIGS. 1 and 2. Specifically, in the following description, a "front to back direction" means a front to back direction when viewed from a seated occupant of the motorcycle seat S. A "seat width direction" is aligned with a right to left direction when viewed from the seated occupant of the motorcycle seat S. In addition, an "up to down direction" is aligned with an up to down direction when viewed from the seated occupant of the motorcycle seat S.

### <Main Configuration of Motorcycle Seat S>

As illustrated in FIG. 1, the motorcycle seat S according to the present embodiment (hereinafter, referred to as the motorcycle seat S) is installed in the motorcycle V in such a manner that the motorcycle seat S is attached to a vehicle body B (motorcycle main body). The motorcycle seat S is configured by placing a cushion pad 2 on a seat bottom plate 1 to be described later and covering a front surface of the cushion pad 2 with a skin material 3. FIG. 2 is an external view of the motorcycle seat S, and for convenience of illustration, illustrates a state where the skin material 3 is removed and the cushion pad 2 (front pad 2A) is exposed at a part of the motorcycle seat S.

The motorcycle seat S is a two-seater seat including a front seating portion S1 for a driver in the front and a rear seating portion S2 for a passenger in the rear. The front seating portion S1 and the rear seating portion S2 are portions on which buttocks or thighs of a seated occupant (namely, occupant) of the motorcycle V are placed. In addition, a non-seating portion S3 on which the occupant is not seated is provided between the front seating portion S1 and the rear seating portion S2 in the motorcycle seat S.

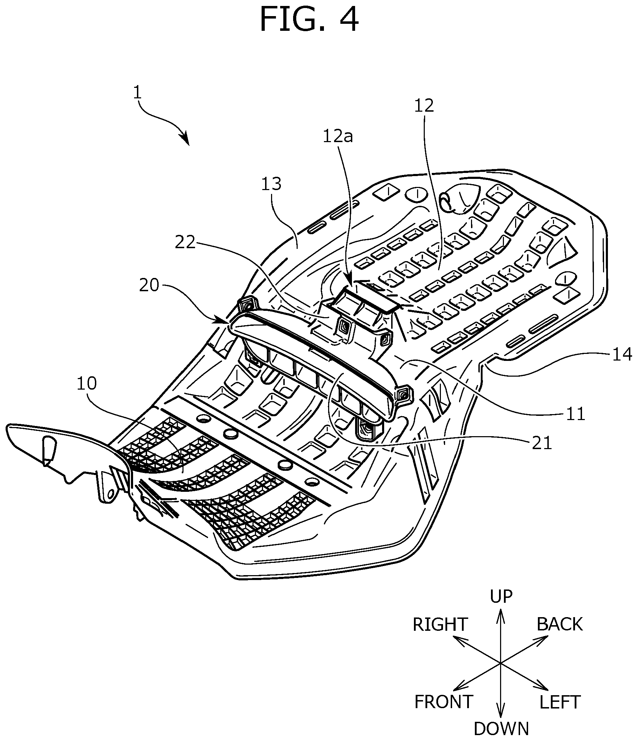

A backrest BR that supports the passenger from behind is provided behind the rear seating portion S2. In addition, a cap C of a cover member is disposed at a front end of the rear seating portion S2, the cap C covering a backrest attachment portion (backrest insertion portion 12a in FIG. 4 to be described later) for attaching a backrest (not illustrated) for the seated occupant on the front seating portion S1.

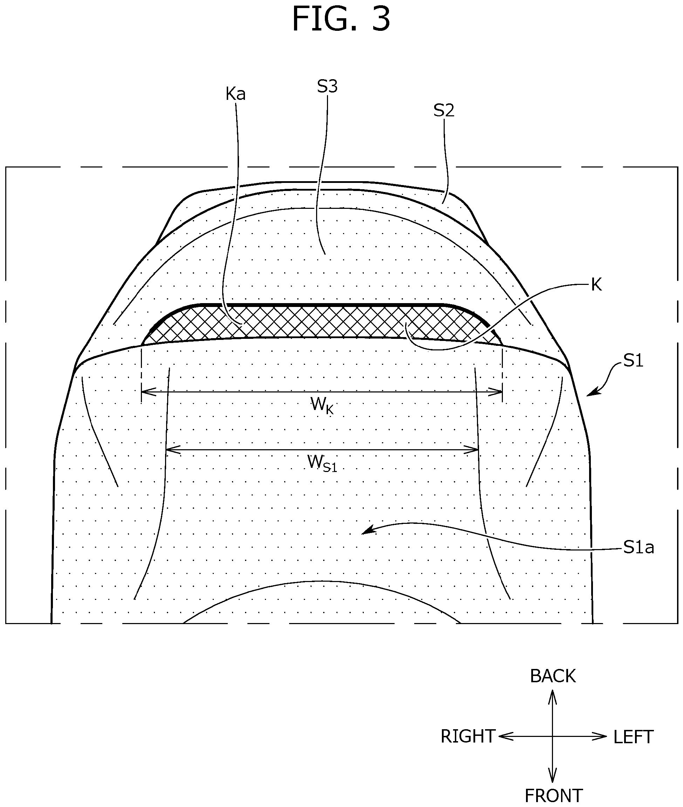

As illustrated in FIGS. 2 and 3, in the motorcycle seat S, an air blowing port K through which air blown from a blower 30 (air blowing device) to be described later passes is provided at a position facing the buttocks and the lumbar of the seated occupant. In more detail, the air blowing port K is provided at a lower portion (base end portion) of the non-seating portion S3 (standing wall portion rising upward) provided at a rear end of the front seating portion S1.

According to such a configuration, air blowing can be performed such that air from the blower 30 flows around the buttocks from behind the seated occupant to wrap around underbutts or the seated occupant. In addition, since the air is blown from the blower 30 to an underbutt side of the seated occupant, the underbutts of the seated occupant are suppressed from getting stuffy (buttocks are suppressed from getting stuffy).

In addition, as illustrated in FIG. 3, the skin material 3 includes a mesh member Ka at a position corresponding to the air blowing port K. The mesh member Ka has a mesh shape, and suppresses the entry of foreign matter into the seat from the outside via the air blowing port K while securing the air blowing port K.

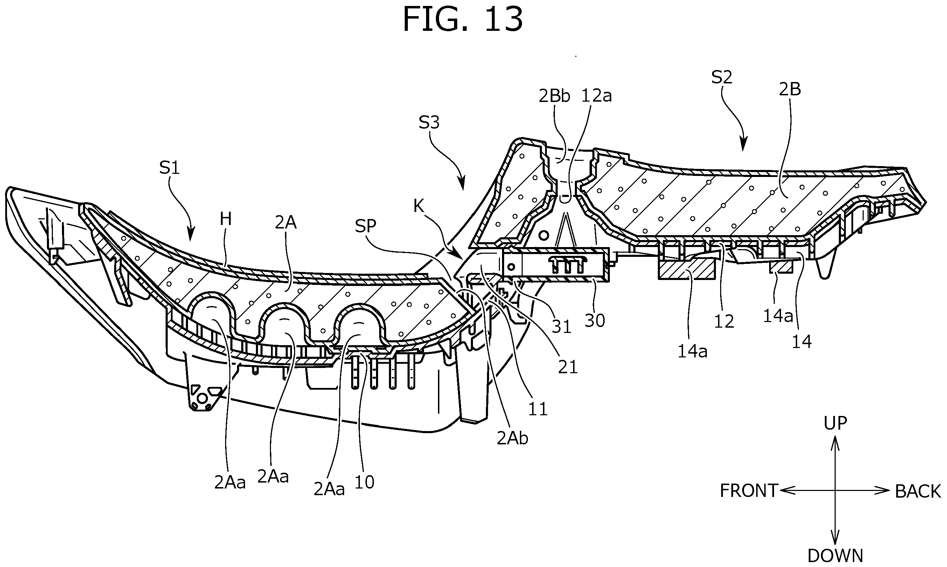

In addition, as illustrated in FIG. 13 to be described later, a seat heater H that heats a seating surface of the front seating portion S1 is built-in in the front seating portion S1.

### (Seat Bottom Plate 1)

FIG. 4 illustrates a perspective view of the seat bottom plate 1. The seat bottom plate 1 as a bottom plate forming a lower surface of the motorcycle seat S is made of a resin material, and includes a front portion 10 corresponding to the front seating portion S1, an inclined portion 11 corresponding to the non-seating portion S3, and a rear portion 12 corresponding to the rear seating portion S2 in order from the front.

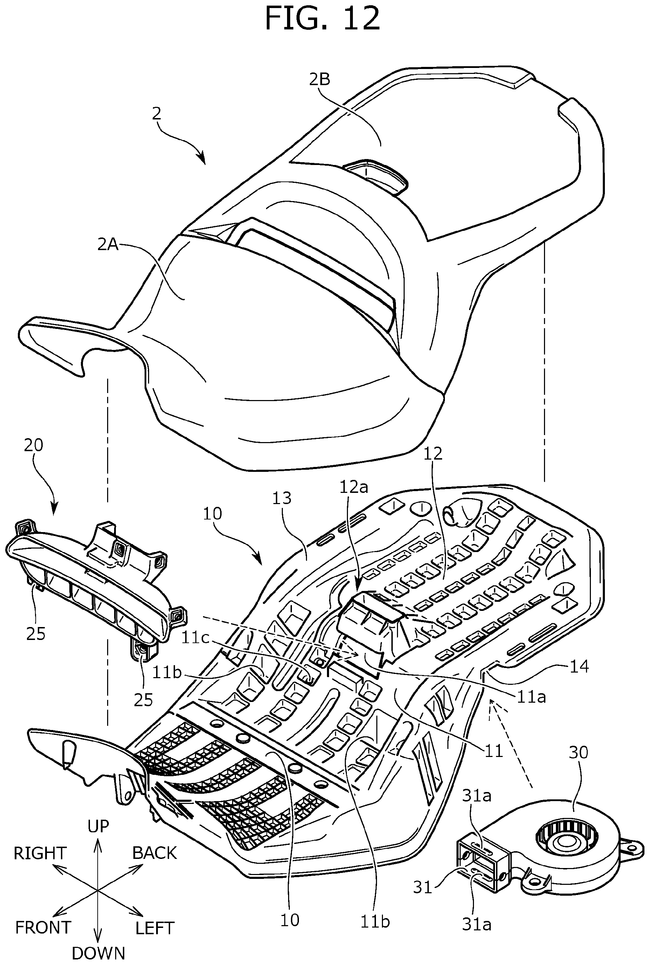

As illustrated in FIG. 4, the seat bottom plate 1 includes a front surface 13 and a back surface 14. As illustrated in FIG. 12 to be described later, an opening portion 11a penetrating through the inclined portion 11 in the front to back direction of the seat is formed in the vicinity of the center of the inclined portion 11 that is inclined upward toward the rear. When a duct member 20 to be described later is attached to the seat bottom plate 1, the opening portion 11a is disposed to face a blower connection portion 21a of the duct member 20. In addition, the seat bottom plate 1 includes the backrest insertion portion 12a (protruding portion) protruding upward from the front surface 13, at a front end of the rear portion 12.

As illustrated in FIG. 12 to be described later, recessed portions 11b that are recessed downward from the front surface 13 are formed in the vicinity of a boundary between the inclined portion 11 and the front portion 10. Lower attachment portions 25 of the duct member 20 are fitted to the recessed portions 11b from above.

As illustrated in FIG. 13 to be described later, a plurality of mounting members 14a that abut the vehicle body B when the motorcycle seat S is attached to the vehicle body B are provided on the back surface 14 of the seat bottom plate 1 so as to be separated from each other in the seat width direction.

In addition, the back surface 14 of the seat bottom plate 1 is provided with a striker (not illustrated) for attaching the motorcycle seat S to the vehicle body B. The striker can adopt a known structure that allows the striker to engage with a striker engaging portion (not illustrated) provided on a vehicle body B side.

A drain hole (not illustrated) penetrating through the seat bottom plate 1 from the front surface 13 to the back surface 14 may be formed in the seat bottom plate 1 to suppress water puddling. It is preferable that the drain hole is formed in the front portion 10 of the seat bottom plate 1, water being likely to puddle on the front portion 10.

### (Cushion Pad 2)

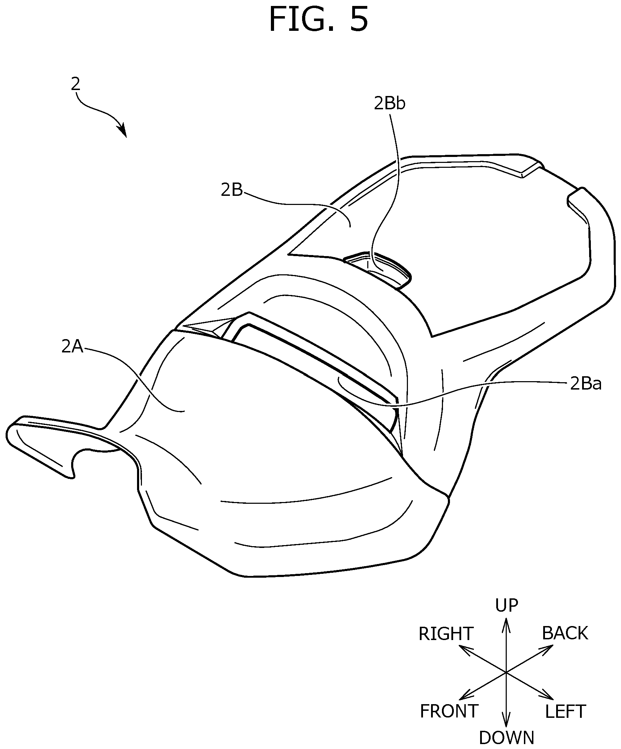

FIG. 5 illustrates a perspective view of the cushion pad 2. The cushion pad 2 is divided into two segments, namely, the front pad 2A corresponding to the front seating portion S1 and a rear pad 2B corresponding to the non-seating portion S3 and to the rear seating portion S2 in order from the front.

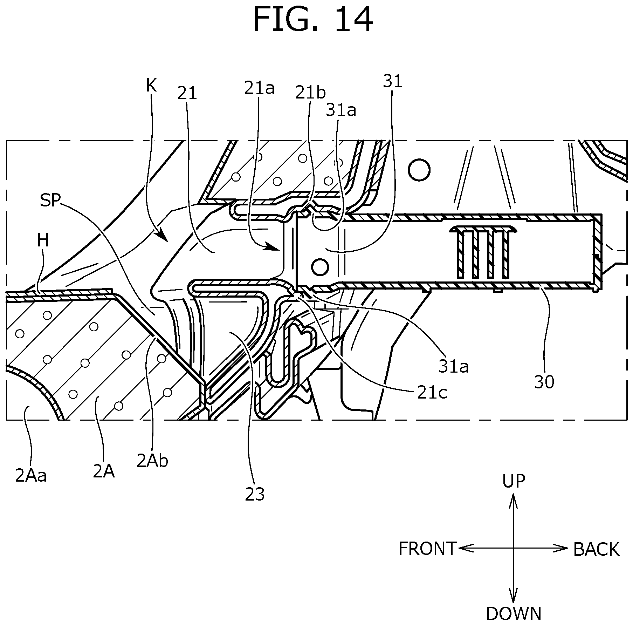

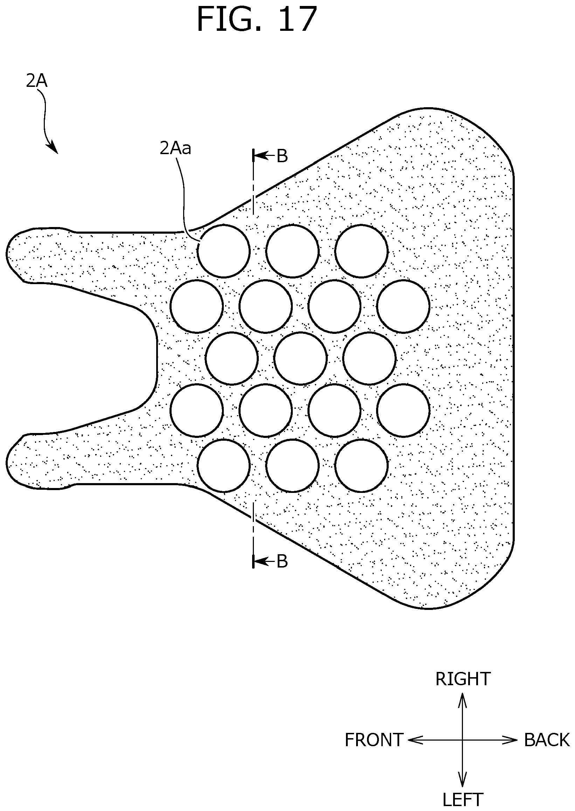

As illustrated in FIG. 17 to be described later, the front pad 2A includes accommodating recessed portions 2Aa that accommodate air cells 50, on a back side of the front pad 2A. A pad inclined portion 2Ab that is inclined downward toward the rear is formed in the seat width direction at a rear end of the front pad 2A (FIGS. 13 and 14 to be described later) .

The rear pad 2B includes a cutout portion 2Ba provided to correspond to the air blowing port K. The cutout portion 2Ba extends in the seat width direction, and forms an opening corresponding to the air blowing port K when the rear pad 2B is combined with the front pad 2A. In addition, the rear pad 2B includes an open hole 2Bb at a position corresponding to the backrest insertion portion 12a of the seat bottom plate 1.

### (Duct Member 20)

Air from the blower 30 that is built-in in the motorcycle seat S is delivered to the seated occupant in the front from the air blowing port K via the duct member 20 attached to the seat bottom plate 1 (FIG. 4).

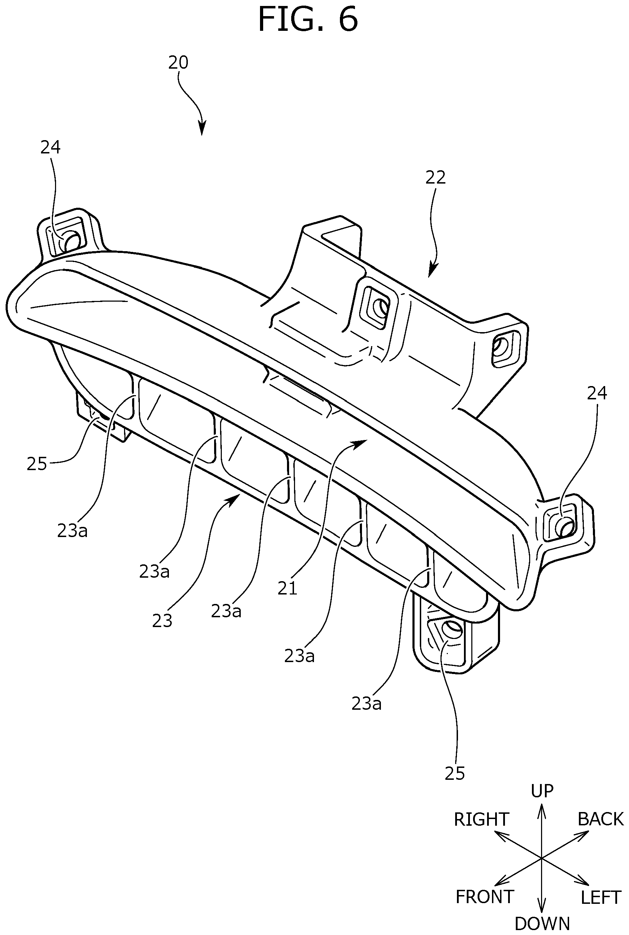

As illustrated in FIGS. 6 to 11, the duct member 20 includes a duct opening portion 21 provided to correspond to the air blowing port K, a fitting portion 22 protruding rearward from an upper surface of the duct opening portion 21, a lower extending portion 23 extending from a lower surface of the duct opening portion 21, upper attachment portions 24 formed in both end portions of the duct opening portion 21, and the lower attachment portions 25 formed in both end portions of the lower extending portion 23.

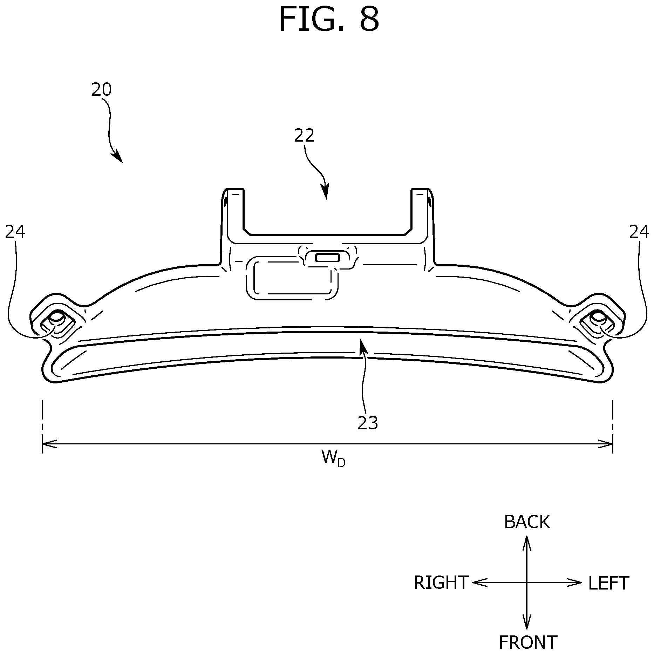

The duct member 20 includes the duct opening portion 21 disposed at a position facing the air blowing port K. The duct opening portion 21 forms a passage path of air blown from the blower 30. The duct opening portion 21 extends in the seat width direction, and a lower side thereof is longer than an upper side thereof. In addition, the duct opening portion 21 is curved such that a central portion thereof is located behind outer portions thereof in the seat width direction (FIG. 8). In other words, since the outer portions of the duct opening portion 21 in the seat width direction extend outward, air blowing can be performed such that air flows around a lateral side of the buttocks or the lumbar of the seated occupant on the front seating portion S1.

A width W_{D} of the duct opening portion 21 (strictly, width W_{D} of a front end portion of the duct opening portion 21) in the seat width direction is wider than a width W_{S1} of a buttock support surface (seating surface) of the front seating portion S1 (W_{D} > W_{S1}). In other words, a width W_{K} of the air blowing port K (width of a lower end of the cutout portion 2Ba of the rear pad 2B) is wider than the width W_{S1} of a buttock support surface S1a (a part of the seating surface) of the front seating portion S1 (W_{K} > W_{S1} in FIG. 3) .

In such a configuration, since the blocking of the duct opening portion 21 by the buttocks of the seated occupant is suppressed, the backflow of air blown from the blower 30 can be suppressed, and air can also be blown to the lateral side of the buttocks of the seated occupant. Incidentally, from the viewpoint of air blowing efficiency, it is preferable that the width W_{K} of the air blowing port K (width of the lower end of the cutout portion 2Ba of the rear pad 2B) is slightly wider than the width W_{D} of the duct opening portion 21.

When the duct member 20 is attached to the seat bottom plate 1, the height position of the duct opening portion 21 is substantially the same as the height position of the air blowing port K of the front surface of the motorcycle seat S. The duct opening portion 21 includes the blower connection portion 21a to which a blower opening portion 31 of the blower 30 is connected, at a rear end of the duct opening portion 21.

A recessed portion 21b corresponding to a protrusion 31a provided in the blower opening portion 31 is formed at an upper end of the blower connection portion 21a. In addition, a lower end portion 21c that the protrusion 31a provided in the blower opening portion 31 abuts is formed at a lower end of the blower connection portion 21a. The recessed portion 21b and the lower end portion 21c are disposed such that the positions thereof in the front to back direction of the seat are substantially the same position.

The fitting portion 22 of the duct member 20 is fitted to the backrest insertion portion 12a (protruding portion) of the seat bottom plate 1. Specifically, as illustrated in FIG. 4, the fitting portion 22 interposes the backrest insertion portion 12a from an outer side in the seat width direction. The fitting portion 22 is fixed to the backrest insertion portion 12a with tightening members (not illustrated). Further, the lower attachment portions 25 are fitted to the recessed portions 11b of the inclined portion 11 of the seat bottom plate 1 from above.

In such a configuration, the duct member 20 can be easily attached and fixed to the seat bottom plate 1. In other words, the ease of assembling the duct member 20 to the seat bottom plate 1 is improved. In addition, appropriate positioning between the blower connection portion 21a of the duct member 20 and the opening portion 11a of the seat bottom plate 1 is obtained.

The lower extending portion 23 of the duct member 20 is formed to be narrower than the duct opening portion 21 in the seat width direction. The lower extending portion 23 is recessed toward a rear side of the seat, and a plurality of reinforcement ribs 23a (vertical ribs) are formed side by side in the seat width direction. Since the duct member 20 includes the lower extending portion 23 including the plurality of reinforcement ribs 23a in the seat width direction, the strength of the duct opening portion 21 that is hollow is improved. Since the reinforcement ribs 23a are provided, even when the seated occupant is in touch with the duct member 20 or even when a load is applied to the duct member 20, the deformation of the duct member 20 is suppressed.

The upper attachment portions 24 and the lower attachment portions 25 are used to attach the duct member 20 to the inclined portion 11 of the seat bottom plate 1. The upper attachment portions 24 and the lower attachment portions 25 are fixed to the inclined portion 11 with tightening members (not illustrated). Specifically, the fitting portion 22 (three locations), the upper attachment portions 24 (two locations), and the lower attachment portions 25 (two locations) of the duct member 20 are fixed to outsert nuts (seven locations) of the seat bottom plate 1 with tightening members (bolts).

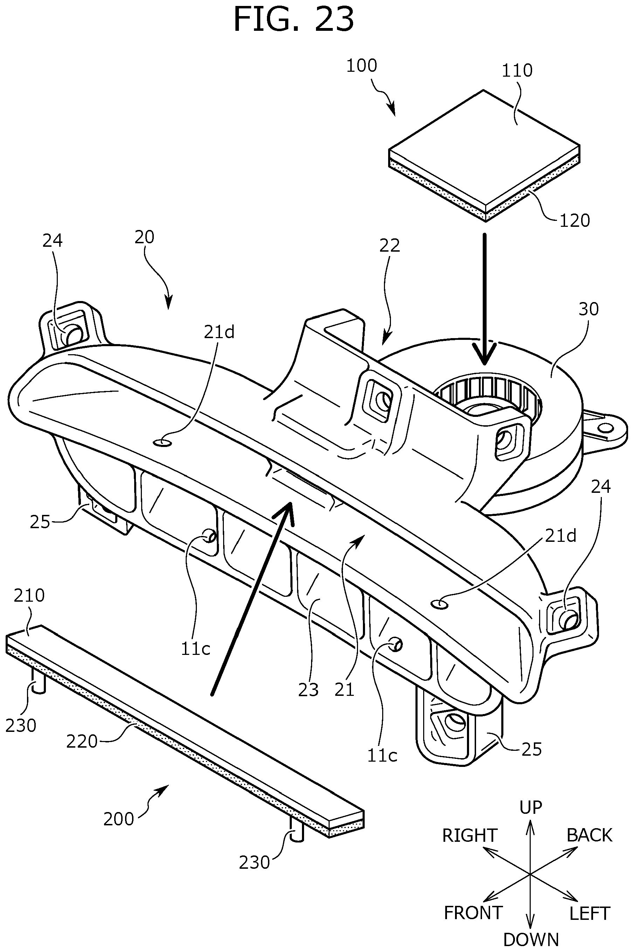

In addition, a hanging hole 11c on which the skin material 3 is hung may be provided at a lower surface portion in front of the duct member 20, specifically, at a position in front of the duct member 20 on the inclined portion 11 of the seat bottom plate 1. Since the hanging hole 11c is provided at a position on the lower surface portion in front of the duct member 20, external appearance is improved, and the formation of wrinkles in the skin material 3 is suppressed. Incidentally, the hanging hole 11c can also be provided at a lower surface portion of the lower extending portion 23 of the duct member 20 (FIG. 23 to be described later).

### (Blower 30)

The motorcycle seat S of the present embodiment includes the blower 30. Incidentally, in FIGS. 12 to 14 to be illustrated below, the illustration of the skin material 3 is omitted. As illustrated in FIG. 12, in a state where the duct member 20 is attached to the front surface 13 of the seat bottom plate 1, the cushion pad 2 is placed, and the cushion pad 2 is covered with the skin material 3. Then, the blower 30 is attached to the back surface 14 of the seat bottom plate 1 with tightening members (not illustrated).

As illustrated in the cross-sectional views of FIGS. 13 and 14 taken along line A-A in FIG. 2, the blower opening portion 31 of the blower 30 is connected to the blower connection portion 21a of the duct member 20. Specifically, the protrusion 31a on an upper side is fitted to the recessed portion 21b on an upper side of the blower connection portion 21a, and the protrusion 31a on a lower side abuts the lower end portion 21c of the blower connection portion 21a, so that the blower opening portion 31 is connected to the blower connection portion 21a.

As illustrated in FIG. 13, the blower 30 is disposed on a back surface 14 side of the seat bottom plate 1 at a position avoiding the front seating portion S1. In more detail, the blower 30 is disposed behind a rear end portion of the front seating portion S1, and below the rear seating portion S2 and the non-seating portion S3. In such a configuration, the blower 30 can be efficiently and compactly disposed. In addition, the air blowing port K is disposed not to overlap the air cells 50 in the up to down direction. In other words, the air blowing port K is disposed at a position different from those of the air cells 50, specifically, behind the air cells 50 in the front to back direction of the seat.

In addition, as illustrated in FIG. 13, the blower 30 is disposed in front of the mounting members 14a. According to this configuration, since vibration transmitted to the blower 30 is reduced by suppression of vibration by the mounting members 14a, the air blowing by the blower 30 is stabilized.

As illustrated in FIG. 14, the duct opening portion 21 is disposed to be separated from the air blowing port K. In more detail, a front end of the duct opening portion 21 is disposed on a rear side (for example, rear side by approximately 10 mm) of the front surfaces of the front pad 2A and the rear pad 2B. According to such a configuration, since the buttocks of the seated occupant are avoided from directly abutting the duct member 20, air blowing can be efficiently performed.

In addition, as illustrated in FIG. 14, a space SP extending in the seat width direction is formed below the duct opening portion 21. In more detail, the pad inclined portion 2Ab that is inclined downward toward the rear is formed in the seat width direction at the rear end of the front pad 2A, and the space SP extending in the seat width direction is formed between the pad inclined portion 2Ab and the lower extending portion 23 of the duct member 20.

Since the space SP extending in the seat width direction exists below the duct opening portion 21, air that hits the back of the seated occupant and returns rearward can be received by and flow into the space SP, and blown forward from both right and left sides in the seat width direction, so that the air blowing efficiency is improved.

### <Regarding Body Pressure Distribution Optimization of Front Seating Portion S1 by Air Cells 50>

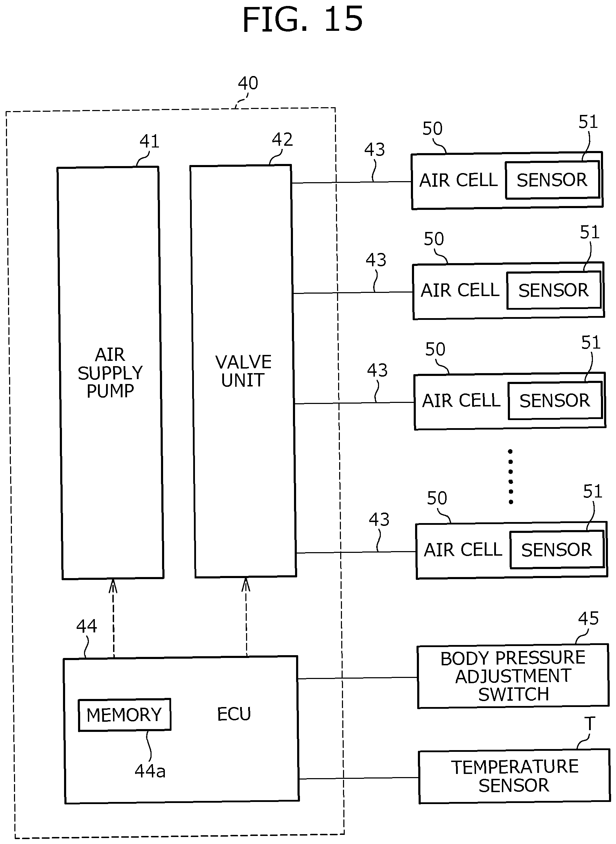

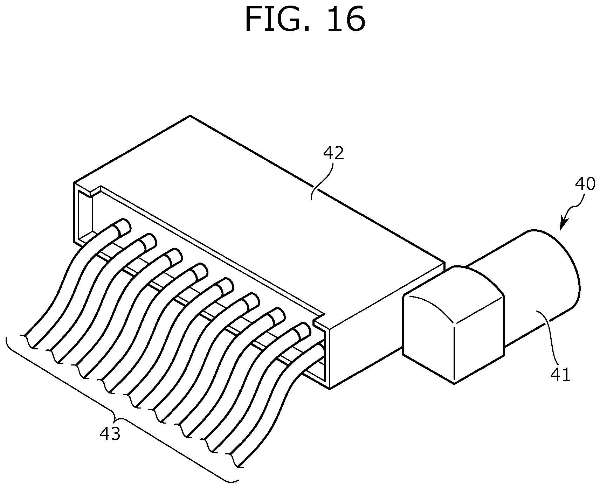

As illustrated in FIGS. 15 to 18, a fluid supply device 40 is built-in in the motorcycle seat S according to the present embodiment to adjust hardness of the front seating portion S1 through the air cells 50. The fluid supply device 40 includes, as main components, an air supply pump 41 (compressed air generation device) that generates compressed air, a valve unit 42 (switching device) that is actuated to switch supply destinations of the compressed air generated by the air supply pump 41, and tubes 43 that connect the air supply pump 41 and the valve unit 42 to the air cells 50 (FIGS. 15 and 16). In addition, the fluid supply device 40 includes an electoric control unit (ECU) 44 as a control system device. The ECU 44 controls air blowing of the blower 30 (air blowing device) and also electronically controls other electrical components.

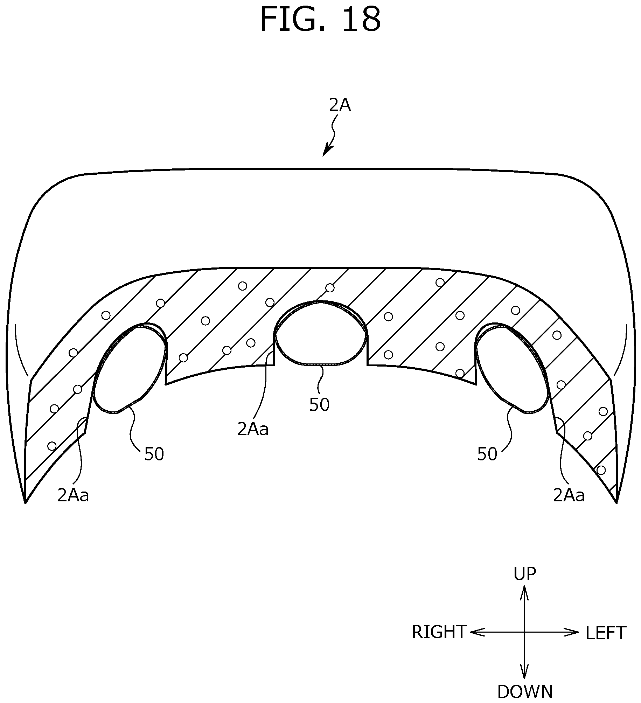

As illustrated in FIGS. 17 and 18, 17 air cells 50 are disposed in the accommodating recessed portions 2Aa formed on the back side of the front pad 2A forming the front seating portion S1. The air cells 50 adjust the hardness of the front seating portion S1 (in other words, adjust stress) to optimize a body pressure distribution (stress distribution) of the seated occupant.

The air cell 50 is a bag used to adjust the hardness of the front seating portion S1, and bulges when the compressed air as a fluid supplied from the air supply pump 41 and the valve unit 42 is sealed in the air cell 50. Each of the air cells 50 is combined with a sensor 51 serving as detection means that detects a pressure (also referred to as body pressure or seating pressure) applied from the seated occupant (FIG. 15). Incidentally, the sensor 51 may not be individually provided for each of the air cells 50 as long as the sensor 51 can detect a pressure of each of the air cells 50. Specifically, a mat-shaped sensor capable of detecting a pressure distribution may be disposed on an upper surface of the front pad 2A.

The air supply pump 41 is a compressed air generation device that generates compressed air, and is formed of a small air pump. The valve unit 42 corresponds to a switching device, and is actuated to switch supply destinations of the compressed air generated by the air supply pump 41. Specifically, the valve unit 42 is provided with a plurality of discharge ports of the compressed air. In addition, an electromagnetic valve (not illustrated) is provided inside the valve unit 42. Then, when the valve unit 42 is operated to switch the electromagnetic valve on and off, switching is made to a discharge port from which the compressed air is actually discharged, among the plurality of discharge ports.

In addition, as illustrated in FIG. 16, the tube 43 is connected to each of the discharge ports. Each of the tubes 43 corresponds to a supply path forming member, and forms a compressed air supply path. In addition, each of the tubes 43 is connected to a compressed air inlet provided in the air cell 50. Therefore, when switching is made to a discharge port from which the compressed air is actually discharged in the valve unit 42, the compressed air supply destination (namely, the air cell 50 to which the compressed air is blown) is switched. One or two air cells 50 are connected to the destination of each of the tubes 43.

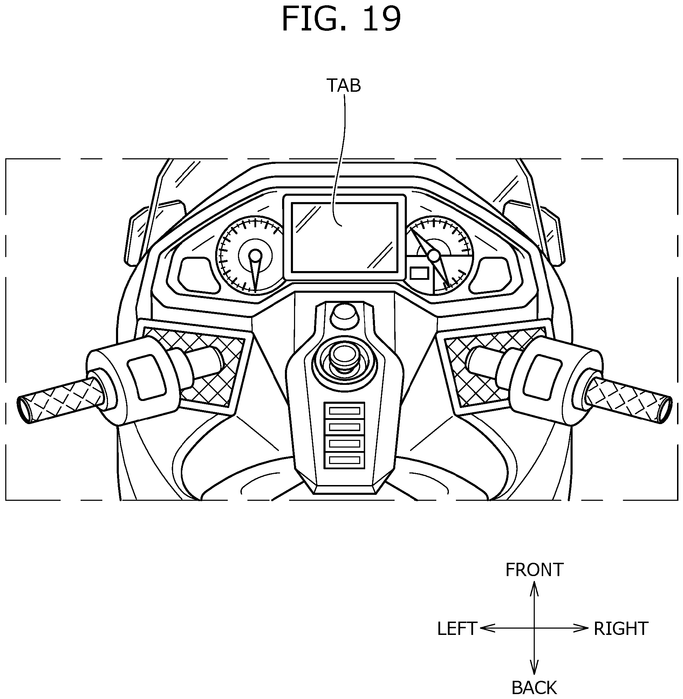

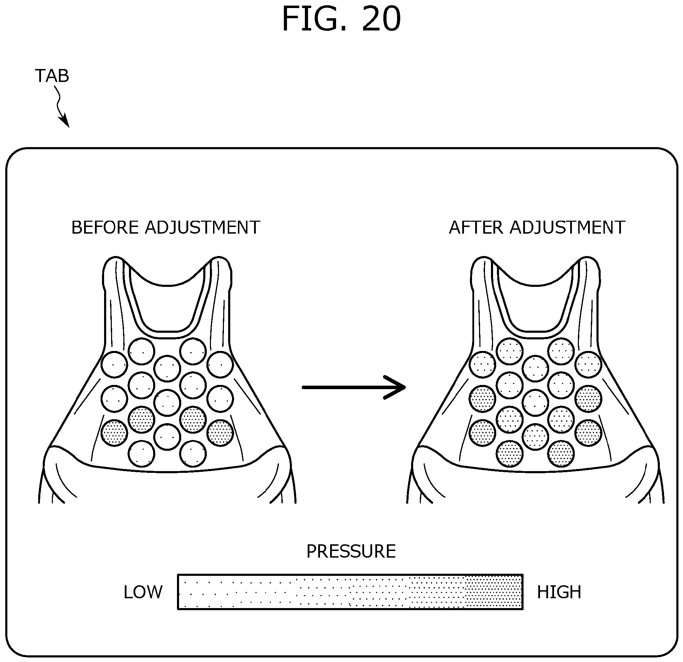

As illustrated in FIG. 19, the motorcycle V according to the present embodiment includes a tablet terminal TAB that is operable by the seated occupant, in front of the motorcycle seat S. A mode where the body pressure distribution of the seated occupant is optimized is schematically displayed on a screen of the tablet terminal TAB (FIG. 20). As illustrated in FIG. 20, the highs and lows of pressure are illustrated in a color chart at a lower portion of the screen of the tablet terminal TAB. At this time, it is preferable that setting is made such that the body pressure indicates the vicinity of the center of the color chart.

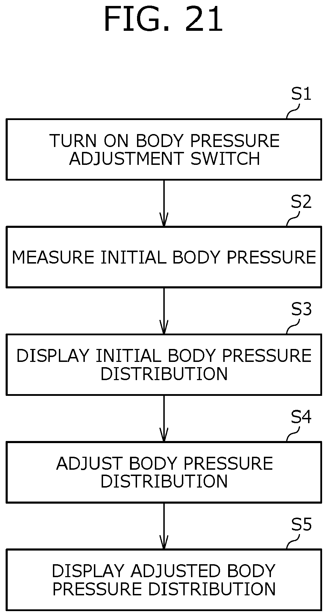

FIG. 21 is a flowchart illustrating a procedure of a body pressure distribution optimization flow performed by the ECU 44 (control device). Incidentally, hereinafter, a case where there is only one occupant, namely, a case where a seated occupant is seated only on the front seating portion S1 of the motorcycle seat S will be described as a specific example.

In the body pressure distribution optimization flow, the body pressure distribution is optimized to be uniform by controlling the amount of bulge of each of the air cells 50 according to body pressure applied to each of the air cells 50. Specifically, a body pressure distribution adjustment flow is started from when a body pressure adjustment switch 45 is turned on in a state where the seated occupant is seated on the motorcycle seat S (S1). Next, the ECU 44 receives a signal from each of the sensors 51, and measures an initial body pressure distribution before the air cells 50 bulge (S2).

Next, the ECU 44 visualizes and displays the measured initial body pressure distribution on the tablet terminal TAB (S3). At this time, as illustrated on the left side of FIG. 20, a body pressure applied to each of the air cells 50 is displayed on an image of the motorcycle seat S.

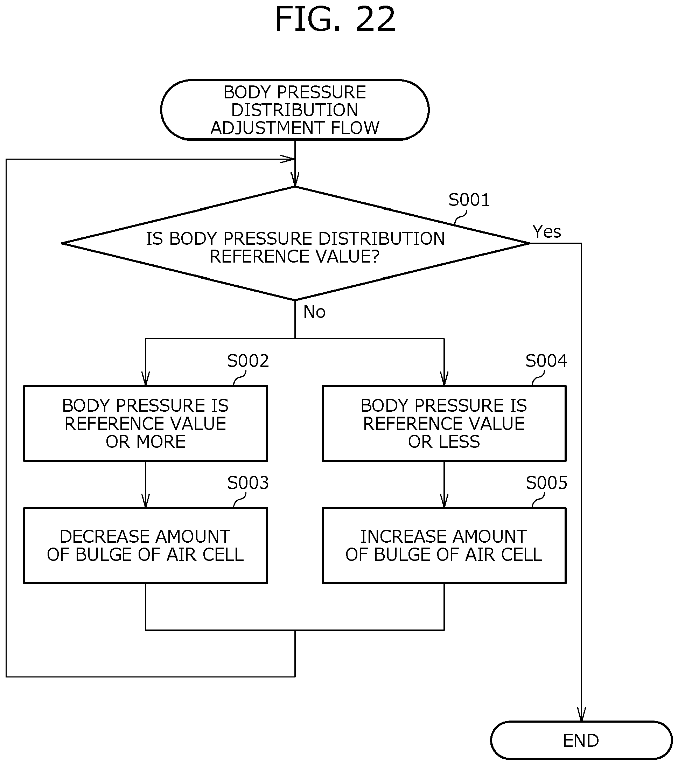

Next, the ECU 44 adjusts the amount of bulge of each of the air cells 50 according to the measured initial body pressure distribution to adjust the body pressure distribution (S4). Specifically, the body pressure distribution adjustment flow (FIG. 22) for adjusting the amount of bulge of each of the air cells 50 such that the distribution of body pressures applied to the air cells 50 decreases, namely, the body pressure distribution is close to being uniform is executed.

Here, the body pressure distribution adjustment flow of FIG. 22 will be described. In the body pressure distribution adjustment flow, first, the EUC 44 determines whether or not the distribution of body pressures applied to the air cells 50 is a reference value (S001). When the distribution of body pressures applied to the air cells 50 is not the reference value (No in S001), for example, when the body pressure is the reference value or more (S002), the amount of bulge of each of the air cells 50 is decreased (S003), and when the body pressure is the reference value or less (S004), the amount of bulge of each of the air cells 50 is increased (S005). As the reference value at this time, for example, an average value of body pressures applied to the air cells 50 can be adopted.

Then, the amount of bulge of each of the air cells is adjusted until the distribution of body pressures applied to the air cells 50 reaches the reference value (Yes in S001). In the body pressure distribution adjustment flow, when a body pressure applied to an air cell 50 is larger than the reference value, the ECU 44 performs control such that the amount of bulge of the air cell 50 is decreased to reduce the body pressure. In addition, when a body pressure applied to an air cell 50 is smaller than the reference value, the ECU 44 performs control such that the amount of bulge of the air cell 50 is increased to increase the body pressure. In such a manner, the distribution of body pressures applied to the air cells 50 is optimized to be close to being uniform, so that a good sense of seating comfort can be obtained.

Next, the ECU 44 visualizes and displays the adjusted body pressure distribution on the tablet terminal TAB (S5). At this time, as illustrated on the right side of FIG. 20, an adjusted body pressure applied to each of the air cells 50 is displayed on an image of the motorcycle seat S. In such a manner, the seated occupant can confirm that the body pressure distribution is adjusted, not only sensuously but also visually.

Incidentally, the amount of bulge (body pressure) of each of the air cells 50 according to a preference of the seated occupant can also be stored in advance in a memory 44a provided in the ECU 44. At this time, the tablet terminal TAB may be operated to adjust the amount of bulge (body pressure) of each of the air cells 50 to a favorite value.

In addition, when the seating position of the seated occupant is changed in a situation where the body pressure adjustment switch 45 is turned on (for example, when the seating position of the seated occupant is changed depending on the traveling situation), the body pressure distribution optimization may be performed at all times.

### <Modification Examples>

The configuration of the motorcycle seat S according to one embodiment of the present invention has been described above, but the embodiment is merely one example to facilitate understanding of the present invention, and does not limit the present invention. Namely, the present invention can be changed or improved without departing from the concept thereof, and it goes without saying that the present invention includes equivalents thereof.

Hereinafter, a temperature adjustment mechanism provided in the motorcycle seat according to modification examples will be described with reference to FIGS. 23 to 25. As illustrated in FIG. 23, a first temperature adjustment member 100 that warms air suctioned by the blower is disposed on an upper surface of the blower 30 connected to the duct member 20, and a second temperature adjustment member 200 that cools air blown from the blower 30 is disposed in the duct opening portion 21 of the duct member 20.

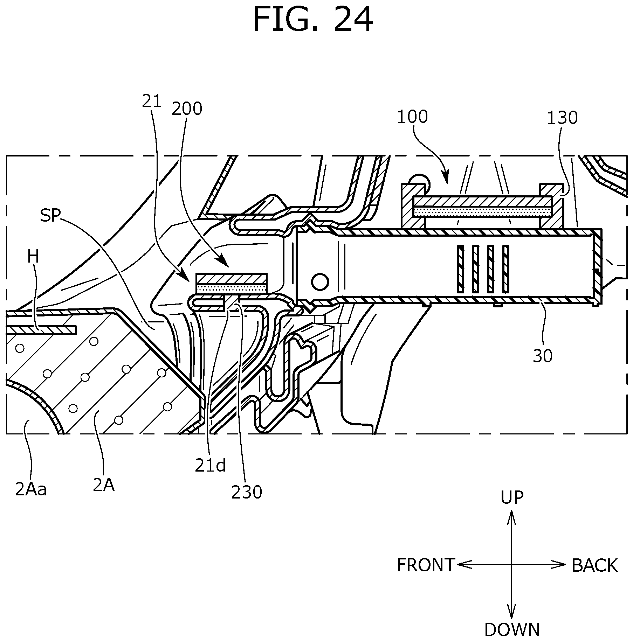

The first temperature adjustment member 100 includes a Peltier element 110 for warming and a heat sink 120, and is disposed on the upper surface of the blower 30 (specifically, above a suction port of the blower 30) by a fixing member 130 (FIG. 24).

In addition, the second temperature adjustment member 200 includes a Peltier element 210 for cooling and a heat sink 220, and a protrusion 230 as a fixing member provided on a heat sink 220 side is fitted to a fitting hole 21d, so that the second temperature adjustment member 200 is disposed on an inner lower surface of the duct opening portion 21 (FIG. 24).

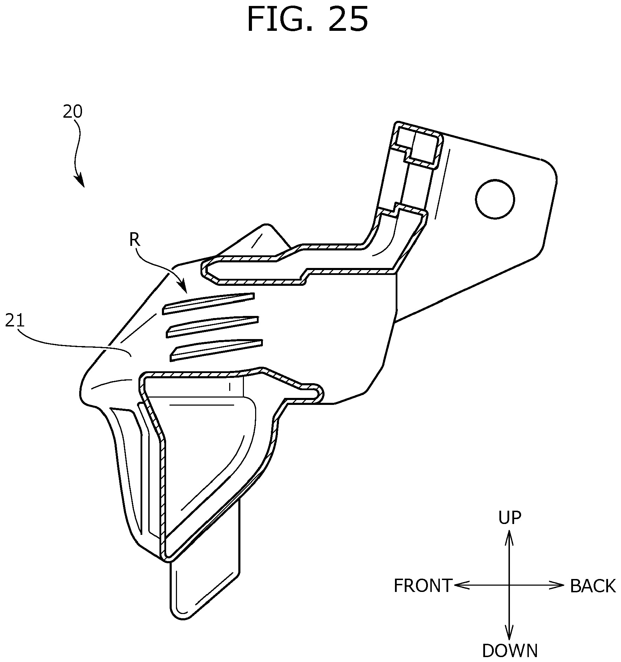

Incidentally, as illustrated in FIG. 25, a louver R that adjusts an air blowing direction (for example, up to down direction) may be disposed in the duct opening portion 21 of the duct member 20 to be able to adjust the air blowing direction. The louver R includes a plurality of plate-shaped members of which the orientations can be adjusted in the up to down direction. Since the louver R is disposed, air can be blown toward the seating surface (buttock support surface S1a) of the front seating portion S1.

At this time, it is preferable that the louver R is adjusted to blow air toward the seating surface (buttock support surface S1a) (adjusted to blow air downward) before the seated occupant is seated on the front seating portion S1, and the louver R is adjusted at any time to blow air toward positions facing the buttocks and the lumbar of the seated occupant (adjusted to blow air forward or upward) after the seated occupant is seated on the front seating portion S1.

In such a manner, air is blown toward the seating surface, so that a sense of warmth after being seated can be made good. Further, the seated occupant may move the louver R up and down in a state where the seated occupant is seated on the front seating portion S1, to cause air to be blown locally and sequentially to the buttocks and to the lumbar of the seated occupant which are likely to get stuffy.

As described above, according to the first temperature adjustment member 100 or the second temperature adjustment member 200, the comfort of the seated occupant can be further improved by a cooling and warming effect. For example, when the air temperature or the temperature of the seating surface is low or tends to descend, the first temperature adjustment member 100 can be actuated to blow warm air to the seated occupant or to the seating surface (for example, the buttock support surface S1a of the front seating portion S1).

In addition, when an outside air temperature or a temperature of the seating surface is detected by a temperature sensor T (thermistor) illustrated in FIG. 15, and the air temperature or the temperature of the seating surface is high or tends to rise, the second temperature adjustment member 200 can be actuated to blow cool air to the seated occupant or to the seating surface (for example, the buttock support surface S1a of the front seating portion S1).

According to the temperature adjustment mechanism provided in the motorcycle seat according to a modification example, in addition to warming the seating surface using the seat heater H provided in the front seating portion S1, the temperature of air blown from the blower 30 can be adjusted.

In addition, a dedicated application may be installed in the tablet terminal TAB, and control of air blowing of the blower 30, control of cooling and warming by the temperature adjustment mechanism, and display of the amount of blown air or of a cooling and warming temperature may be performed.

In addition, in the embodiment, the air blowing port K is provided for the seated occupant on the front seating portion S1, but an additional air blowing port for a seated occupant on the rear seating portion S2 may be provided at a rear portion of the backrest BR. At this time, the seating portions that perform air blowing may be switched by operating the tablet terminal TAB.

In addition, in the embodiment, the sensors 51 are used to optimize the body pressure distribution, but the sensors 51 can also be used to control air blowing by the blower 30. The position of the buttocks of the seated occupant may be estimated by the sensors 51 to adjust the intensity of air blowing of the blower 30.

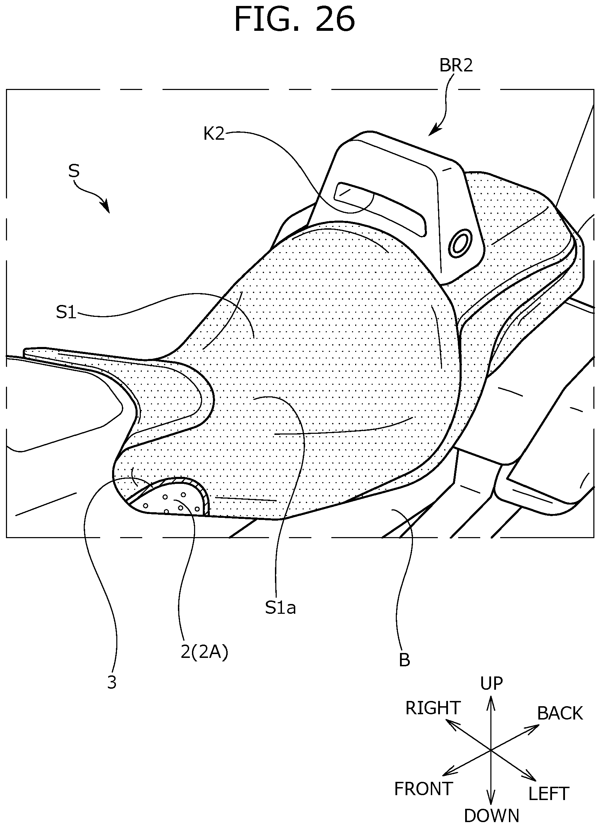

In addition, as illustrated in FIG. 26, an air blowing port K2 may be provided in a backrest BR2 for the seated occupant on the front seating portion S1, the backrest BR2 being attached to the backrest insertion portion 12a. Air can be blown from the lumbar of the seated occupant toward the buttocks from the air blowing port K2 through which the air blown from the blower 30 passes.

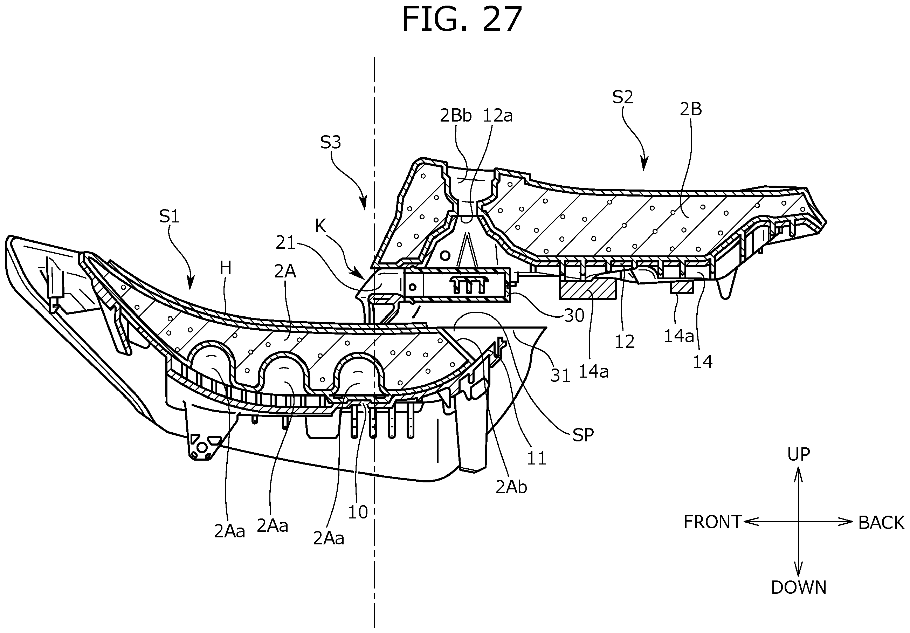

In addition, as illustrated in FIG. 27, the air cells 50 and the air blowing port K may be disposed to overlap each other in the up to down direction. In other words, the air blowing port K is disposed at the same position as those of the air cells 50 in the front to back direction of the seat, specifically, above the air cells 50.

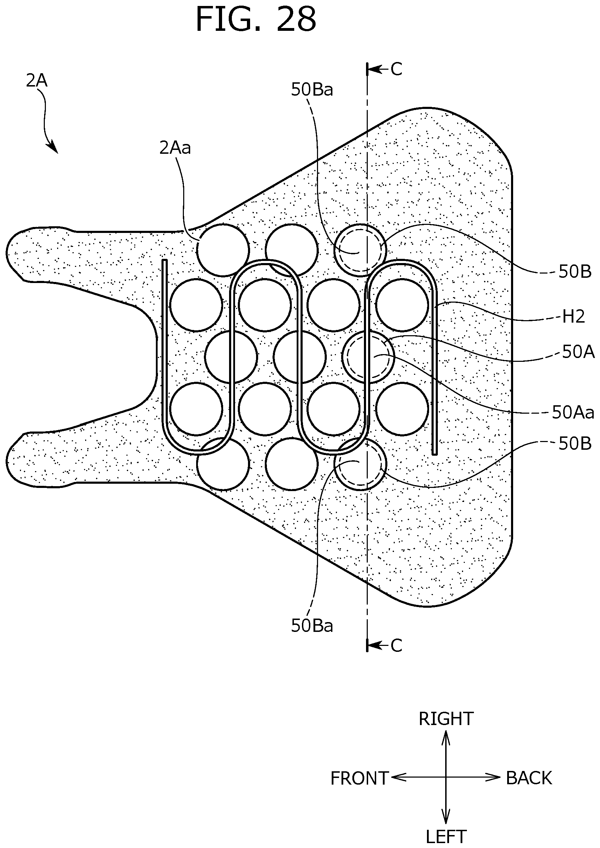

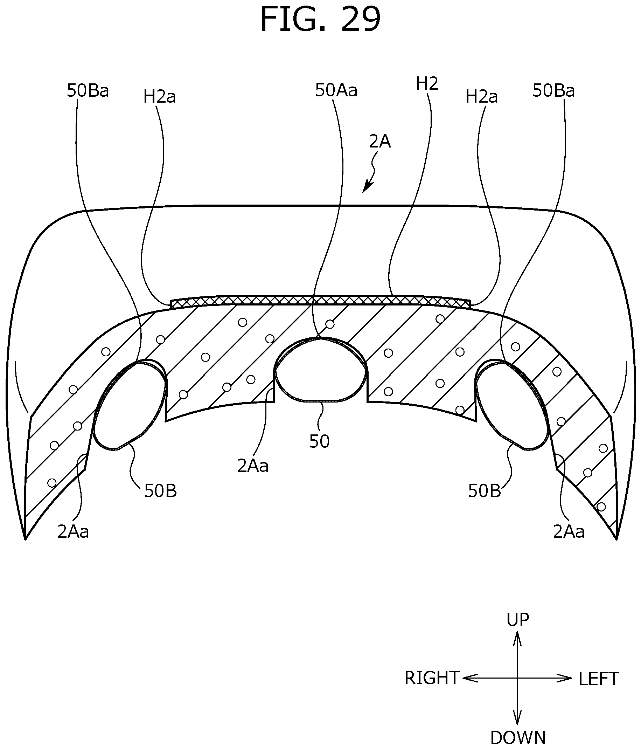

In addition, as illustrated in FIGS. 28 and 29, a heater member H2 having a wire shape may be disposed at a position where the heater member H2 overlaps tops 50Aa of air cells 50A in the up to down direction, the air cells 50A being located at the center. According to such a configuration, the heater member H2 is provided above the tops 50Aa of the air cells 50A that are closest to the seating surface (buttock support surface S1a), so that the seated occupant is easily warmed.

At this time, as illustrated in FIG. 29, it is preferable that the heater member H2 is disposed at a position where the heater member H2 does not overlap tops 50Ba of air cells 50B in the up to down direction, the air cells 50B being disposed on an outer side in the seat width direction. In other words, it is preferable that the tops 50Ba of the air cells 50B are disposed outside side end portions H2a of the heater member H2 in the seat width direction. According to such a configuration, the heater member H2 can be suppressed from interfering with the bulge of the air cells 50B.

The straddle-type seat according to the present embodiment has been described above by taking a vehicle seat to be used mainly for two-wheeled vehicles as an example. The straddle-type seat according to the present embodiment is not limited to a vehicle seat for two-wheeled vehicles, and is applicable to, for example, seats for snowmobiles, water scooters, three-wheeled buggy vehicles, or construction machines.

### REFERENCE SIGNS LIST

- V:: Motorcycle
- B:: Vehicle body
- S:: Motorcycle seat (straddle-type seat)
- S1:: Front seating portion (seating portion)
S1a: Buttock support surface

- S2:: Rear seating portion
- S3:: Non-seating portion (standing wall portion)

- K, K2:: Air blowing port
Ka: Mesh member

- BR, BR2:: Backrest

- H:: Seat heater
- H2:: Heater member
- 1:: Seat bottom plate
- 2:: Cushion pad
2A: Front pad
2Aa: Accommodating recessed portion
2Ab: Pad inclined portion

- SP:: Space
2B: Rear pad
2Ba: Cutout portion
2Bb: Open hole

- 3:: Skin material
- C:: Cap
- 10:: Front portion
- 11:: Inclined portion
11a: Opening portion
11b: Recessed portion
11c: Hanging hole

- 12:: Rear portion
12a: Backrest insertion portion

- 13:: Front surface
- 14:: Back surface
14a: Mounting member

- 20:: Duct Member
21: Duct opening portion
21a: Blower connection portion
21b: Recessed portion
21c: Lower end portion
21d: Fitting hole
R: Louver
22: Fitting portion
23: Lower extending portion
23a: Reinforcement rib
24: Upper attachment portion
25: Lower attachment portion

- 30:: Blower (air blowing device)
- 31:: Blower opening portion
31a: Protrusion

- 40:: Fluid supply device
41: Air supply pump
42: Valve unit
43: Tube
44: ECU (control device)
44a: Memory
45: Body pressure adjustment switch

- T:: Temperature sensor
- 50, 50A, 50B:: Air cell
50Aa, 50Ba: Top

- 51:: Sensor

- TAB:: Tablet terminal
- 100:: First temperature adjustment member
110: Peltier element for warming
120: Heat sink
130: Fixing member

- 200:: Second temperature adjustment member
210: Peltier element for cooling
220: Heat sink
230: Protrusion

## Claims

1. A straddle-type seat on which a seated occupant is seated in a straddling state, the straddle-type seat, comprising:
an air blowing device; and
an air blowing port through which air blown from the air blowing device passes,
wherein the air blowing port is provided at a position facing buttocks of the seated occupant.

2. The straddle-type seat according to claim 1, comprising:
a seating portion on which the seated occupant is seated; and
a standing wall portion provided at a rear end of the seating portion,
wherein the air blowing port is provided at a lower portion of the standing wall portion.

3. The straddle-type seat according to claim 2, comprising:
a seat bottom plate,
wherein the air blowing device is disposed on a back surface side of the seat bottom plate at a position avoiding the seating portion.

4. The straddle-type seat according to claim 3,
wherein a back surface of the seat bottom plate is provided with a mounting member that abuts a vehicle body when the straddle-type seat is attached to the vehicle body, and
the air blowing device is disposed in front of the mounting member.

5. The straddle-type seat according to claim 4,
wherein the air blowing port includes a duct member,
the duct member includes a duct opening portion at a position facing the air blowing port, and
a width of the duct opening portion is wider than a width of a buttock support surface of the seating portion.

6. The straddle-type seat according to claim 5,
wherein the seat bottom plate includes a protruding portion protruding upward from a front surface of the seat bottom plate, and
the duct member includes a fitting portion that is fitted to the protruding portion.

7. The straddle-type seat according to claim 5,
wherein the duct opening portion is curved such that a central portion of the duct opening portion is located behind outer portions of the duct opening portion in a width direction of the straddle-type seat, and
the duct opening portion is disposed to be separated from the air blowing port.

8. The straddle-type seat according to claim 5,
wherein a space extending in a width direction of the straddle-type seat is formed below the duct opening portion.

9. The straddle-type seat according to claim 1,
wherein the air blowing port includes a mesh member.

10. The straddle-type seat according to claim 1, further comprising:
a temperature adjustment member by which a temperature of the air blown from the air blowing device is adjustable.
